# EUROPEAN PATENT SPECIFICATION

(11) **EP 0 866 940 B1**
(45) Date of publication and mention of the grant of the patent: **13.02.2002**
(21) Application number: 96939233.1
(22) Date of filing: 27.11.1996
(51) Int. Cl.: F28F 3/08

(54) **HEAT EXCHANGER**
WÄRMETAUSCHER
ECHANGEUR THERMIQUE

(30) Priority: 01.12.1995 GB 9524605; 14.02.1996 GB 9603043; 08.10.1996 GB 9620935
(43) Date of publication of application: 30.09.1998
(73) Proprietor: Chart Heat Exchangers Limited, Cardiff, CF4 3LY (GB)
(72) Inventor: WATTON, Brian Keith, Albrighton, Staffs WV7 3RA (GB); SYMONDS, Keith Thomas, Codsall, Staffs WV8 2EN (GB); SYMONDS, Steven Paul, Codsall, Staffs WV8 2EN (GB)
(74) Representative: Moore, John Hamilton
(86) International application number: GB9602921
(87) International publication number: WO9721064

(56) References cited:
- FR-A- 2 152 729
- GB-A- 2 093 582
- US-A- 3 881 701
- US-A- 4 934 453
- US-A- 5 099 915
- US-A- 5 212 004
- US-A- 5 392 848
- WEBSTER: 'WEBSTER DICTIONARY, page 166',
- MCGRAW-HILL: 'DICTIONARY OF ENGINEERING, page 67',
- 'THESAURUS OF METALLURGICAL TERMS, page 17',

## Description

### Technical Field

This invention relates to a heat exchanger comprising the features of the first part of claim. Such a heat exchanger is known, for example, from US-A-4 934 453 and has a high 'area density' : this means that it has a high ratio of heat transfer surface to heat exchanger volume. Area density is typically greater than 300 m² /m³ and may be more than 700 m² /m³. Such heat exchangers are typically used to cool (or heat) process fluids.

### Background Art

Tube and shell heat exchangers are one type of heat exchanger which are well known but they can be expensive to manufacture. Essentially they consist of an exterior tubular shell through which run a number of longitudinally-extending smaller diameter tubes carrying one or more fluids. Other fluids, with which heat is to be exchanged, typically pass transversely across the heat exchanger such that heat is exchanged through the tube walls. A large number of tubes may be needed and they each have to be individually and accurately fixed/secured into a header plate at each end of the shell. In each case holes need to be drilled in the header plates very accurately to locate the tubes. High quality tested tubing then needs to be assembled into the plates and brazed or welded or mechanically-expanded into position. As the tubes are reduced in diameter to increase surfaces available for heat transfer and hence performance/compactness, the more difficult and expensive such configurations become to manufacture.

Typically, the layout of the tubes at the inlet header of such heat exchangers continues through the length of the shell to the outlet, and hence the thermal performance remains constant per unit length. It would however be advantageous, in many circumstances, to vary the heat transfer performance along the shell length in order to provide more nearly optimum conditions as the phase/condition of the fluids change as they pass through.

In US-A-4 934 453 is described a heat exchanger module of fired ceramic material produced from a stack of punched and laminated green ceramic cards. Cut-outs in the cards provide longitudinal and transverse channels and the cards form both primary and secondary heat exchanger surfaces.

It is an object of the present invention to provide an improved heat exchanger having the benefits of aspect ratio and geometry of a conventional heat exchanger but of improved flexibility of design and economy of manufacture. It is also an object to provide a heat exchanger which can be used for the combination of two or more process fluids, particularly where such combination gives rise to an exothermic reaction, and there is thus a need to remove heat from the reaction region as rapidly as possible.

### Disclosure of Invention

The present invention provides a heat exchanger comprising a stack of thin plates, the plates having orifices therethrough which cooperate with orifices in adjoining plates to provide (a) first passageways for a first fluid to pass in a substantially longitudinal direction through the heat exchanger and (b) second passageways for a second fluid to pass through the heat exchanger along substantially transverse paths, the plates being bonded together in fluid tight manner and providing both primary and secondary heat exchange surfaces, characterised in that one or more separator plates are arranged within the heat exchanger which permit the second fluid to pass through the heat exchanger from one transverse path to another transverse flow path.

By primary heat exchange surfaces we mean surfaces of a wall which has on one side a first fluid and on the other side a second fluid, which fluids can exchange heat between one another. By secondary heat exchange surfaces we mean surfaces extending from the primary surfaces, which conduct heat, and which may be surrounded on both sides by the same fluid. In more complex heat exchangers, there may be created passageways for further fluids to participate in the heat exchange process, or further passageways for any one fluid.

A unit stack may include at either or both of its ends plates which are configured to form header plates which prevent flow of either fluid in a longitudinal direction except through said first passageways.

The adjoining peripheries of the plates may form the shell or casing of a longitudinally-extending heat exchanger, such that the shell is created as the stack of plates is bonded together.

As indicated above, within the stack there are plates, called separator plates, which have passages which permit the second fluid to pass longitudinally through the heat exchanger before reverting to a transverse flow path. By having such plates at intervals along the stack with their passages in different locations on adjacent such plates, the second fluid stream can be caused to pass from one side of the heat exchanger to the other or e.g. from one side to the centre, in a transverse direction and back again. This provides what is termed multi pass shellside heat exchanger.

The heat exchanger may also be adapted for multi-streaming i.e. a plurality of separated parallel streams, on its 'tube-side' i.e. a plurality of streams of longitudinally flowing first fluids. This also permits first fluids of different compositions to be cooled (or heated). To enable this to take place supplementary first passageways extend longitudinally through the heat exchanger from a position intermediate between its ends, said supplementary first passageways being accessed transversely from externally of the heat exchanger to enable a further fluid to travel longitudinally through the heat exchanger. Thus, a further first fluid may be admitted transversely part-way along the heat exchanger and removed transversely before the end of the heat exchanger. The further first fluid may thereby have its temperature decreased (or increased) by an amount different from that of the first fluid, which has received the effect of cooling (or heating) over the full length of the heat exchanger.

For combination heat exchangers, used for the combination of two or more process fluids, there will typically be one or more third passageways providing substantially transverse paths for a third fluid to pass from the exterior of the heat exchanger shell and into at least some of the first passageways. In this configuration, both the first and the third fluids are process fluids which are to be combined together within the heat exchanger. The second fluid is typically a coolant, such as water, which is used to remove heat from the region where the first and third fluids are combined. Alternatively, if the reaction is endothermic, the second fluid may be used to provide heat to the region where the first and third fluids are combined.

This technique may be used to combine further process fluids, e.g. a fourth fluid, with the combined product of fluids one and three. This is done by creating one or more fourth passageways providing substantially transverse paths for said fourth fluid to pass from the exterior of the shell and into those same first passageways as the third fluid was introduced into. Alternatively, a fourth fluid could be introduced into the first fluid by admitting the fourth fluid only to selected first passageways into which the third fluid has not been introduced.

The heat exchanger may provide for the introduction of third or further process fluids to the first fluid (or an already combined process fluid) in stages along the heat exchanger. Thus, 10% say of the total quantity of third fluid to be combined may be introduced via a third passageway to the first fluid shortly after the first fluid enters the heat exchanger. This may be followed by a cooling stage, i.e. the provision of one or more second passageways passing through the heat exchanger and carrying coolant. There would follow a further introduction stage in which a third passageway carries another 10% of third (process) fluid to be introduced into the same first passageways. This may be followed by a further cooling stage, and so on.

If the introduction of the third fluid resulted in a very strong exothermic reaction, there might be two (or more) cooling stages following each introduction stage. Alternatively, if the exothermic reaction were very weak, there might be two (or more) introduction stages between each coolant stage.

One or more of the plates in a combination heat exchanger may be coated with a catalyst appropriate to the process in which fluids are to be combined. Alternatively, there may be provided means associated with the heat exchanger for introducing a particulate catalyst, typically in finely divided form, into one of the process fluids before the process fluids combine.

The plates which form the stack may be rectilinear or disc-shaped i.e. circular or oval or any other geometric shape. The orifices are typically differently configured on different types of plate or disc, although in some cases, different types of plates or discs may have the same configuration of orifices but with different periphery features. A first type of disc is one which acts as a header plate through which a first fluid enters or exits the heat exchanger, or alternatively acts as a spacer plate preventing the flow of any fluid other than the first fluid longitudinally through the heat exchanger. A second type of disc has typically circular orifices, each within an orifice surround, for the passage of the first fluid through the heat exchanger, the orifice surround providing at least a primary heat exchange surface. A third type of disc may have orifices of a smaller or larger cross-sectional area from those of the second type of disc. These orifices may for example be semi-circular, the semi-circle being of the same diameter as the orifices in the second type of disc, thus restricting the flow of the first fluid. The restrictions may also serve the function of inducing turbulence in the first fluid flow pattern.

A fourth type of disc provides a separator plate. Such discs have a cut-away portion in one sector of the disc. Such cut-away portion is typically larger than the area of a number of circular orifices in the separator plate and provides for the flow of the second fluid from one transverse section of the heat exchanger to another. A plurality of these fourth types of disc, each with the cut-away portion in a different disc sector and being spaced from one another by other types of disc, may be used to change the direction of the transverse flow of the second fluid, for example through 180°. Alternatively, the separator plate may comprise a disc having a circular cut-away portion to provide a disc and annular plate or "disc and do-nut" type of circulation for the second fluid. The cut-away portions in the separator plates may be circumferentially positioned so that a swirling or helical flow is imparted to the second fluid as it travels from its entry to its exit of the heat exchanger.

A fifth type of disc whilst providing orifices for the flow of the first fluid, carries a radial vent in its periphery. This vent may be in the form of a slit completely through the disc thickness, or a groove only extending partially through the disc thickness. In other types of disc the periphery of the disc is continuous.

Each disc (other than the discs forming header plates or separator plates) has a web providing at least one interconnection between each of the orifice surrounds to another orifice surround, or by way of a web support, an interconnection from an orifice surround to the periphery of the disc. The web (and web support) may provide secondary heat exchange surfaces. For each type of disc which has a web there may be variants of that disc type which have a different web pattern. Where discs of the same type are located immediately adjacent one another, each such disc will have a different web and/or web support pattern. For such adjacent discs, the arrangement may be such that two variants alternate.

Where the heat exchanger is used as a combination heat exchanger i.e. for the combination of two or more process fluids, the third (and fourth) fluids are typically admitted to the first passageways through gaps provided in the orifice surrounds of the second and/or third disc type. All of the orifice surrounds may have such gaps or alternatively only a proportion of them may have gaps. This depends on factors such as the volume of third (or fourth) fluid to be introduced and the degree of exothermic reaction (if any) arising from such introduction. The number of orifice surrounds provided with such gaps may vary from stage to stage of the introduction of third (or fourth) fluid.

The stages in which combination of two or more process fluids take place may be followed by a further cooling stage not interrupted by the introduction of process fluids to one another. The coolant employed as a second fluid in this further cooling stage may be different from the coolant(s) used immediately adjacent the regions where the process fluids are introduced to one another.

The discs employed in the disc stack may be made of the same metallic material and are preferably created by chemically milling or etching thin sheets of metal such as stainless steel and may be as thin as 0.5 mm or less. Not all the types of disc may be of the same thickness. Other metals such as copper or titanium or alloys thereof may be used. The width of the web and/or web support i.e. in the dimension perpendicular to direction of the passageways through the disc, may be the same as, or thicker or thinner than, the width of the orifice surround. The web and/or the web support may have the same thickness as the remainder of each disc of which they form a part. Alternatively the web or web support or parts of them may be thinner than the orifice surrounds or the periphery of the discs. They may for example be only half the thickness of the orifice surrounds e.g. 0.25 mm as compared with 0.5 mm for the remainder of the disc. This permits a reduced flow resistance and hence a lower pressure drop for the transversely flowing second fluid.

The passageways for the first fluid are typically circular in cross-section but they could be of other shapes such as rectangular or triangular. Typically, the various discs or plates are stacked together and kept in alignment through removable pins located in identically positioned alignment holes located in each disc or plate. The stack of discs or plates when so aligned may be loaded in its axial direction and the shell which is so formed may then be evacuated through the vents of the fifth type of disc prior to heating to a temperature at which diffusion bonding of the structure takes place. Depending on the material of which the heat exchanger is made, different bonding techniques such as brazing or resin bonding may be employed.

Inlet and outlet headers or manifolds for the different fluids may be secured to the heat exchanger before or after bonding. In order to permit the entry and exit of the second fluid for transverse flow, sections of the shell will typically be spark eroded or chemically milled through after bonding has taken place.

### Brief Description of Drawings

Embodiments of the invention will now be described by way of example only with reference to the accompanying drawings in which:-
Figure 1 is a cross-section through a diameter of a circular cylindrical heat exchanger being a first embodiment made in accordance with the invention,
Figure 2 shows a first type of plate or disc used in the heat exchanger shown in Figure 1,
Figure 3A shows a first variant of a second type of plate or disc used in the heat exchanger shown in Figure 1,
Figure 3B shows a second variant of a second type of plate or disc used in the heat exchanger shown in Figure 1,
Figure 4A shows a first variant of a third type of plate or disc used in the heat exchanger shown in Figure 1,
Figure 4B shows a second variant of a third type of plate or disc used in the heat exchanger shown in Figure 1,
Figure 5 shows a fourth type of plate or disc used in the heat exchanger shown in Figure 1,
Figure 6A shows a first variant of the fifth type of plate or disc used in the heat exchanger shown in Figure 1,
Figure 6B shows a second variant of a fifth type of plate or disc used in the heat exchanger shown in Figure 1.
Figure 7A shows a third variant of a second type of plate or disc used in the heat exchanger shown in Figures 9 and 10;
Figure 7B shows a fourth variant of a second type of plate or disc used in the heat exchanger shown in Figures 9 and 10;
Figure 8 shows a fifth variant of a second type of plate or disc used in the heat exchanger shown in Figures 9 and 10;
Figure 9 shows schematically in side elevation a second embodiment of the invention, being a heat exchanger adapted for the combination of process fluid;
Figure 10 is an end elevation of the heat exchanger of Figure 9 viewed in the direction of arrow X.
Figure 11 is a diagrammatic illustration in exploded form of a third embodiment of a cylindrical heat exchanger according to the invention;
Figure 12 shows alternative components for a heat exchanger such as that illustrated in Figure 11 but with the shell removed;
Figure 13 is an elevation of individual components for a fourth embodiment of the invention illustrating multiple first stream ducts;
Figure 14 is a similar view to Figure 13 showing alternative components;
Figures 15, 16 and 17 illustrate plates employed in an alternative heat exchanger which has multiple streams, which could be used for different fluids, on the "tube side".

### Best Mode for Carrying Out the Invention

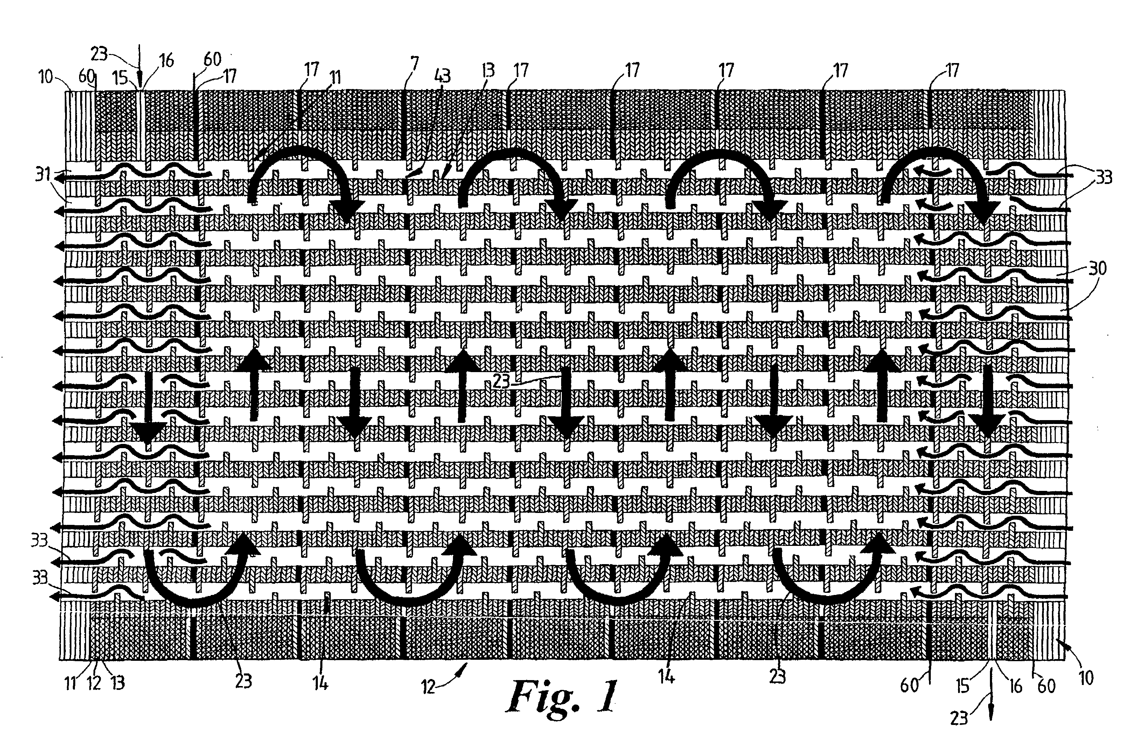

In viewing Figure 1, consider the disc structure of which it is composed. A first fluid enters the heat exchanger from the right hand side at the entries of the first fluid passageways 30 and travels in a substantially longitudinal direction. The first fluid is caused to undulate as indicated by arrows 33 and leaves the heat exchanger at first fluid passageway outlets 31. A second fluid moves transversely through the heat exchanger as indicated by arrows 23, switching its direction of flow through 180° at intervals along the length of the heat exchanger. The two fluids may be at different pressures as well as at different temperatures.

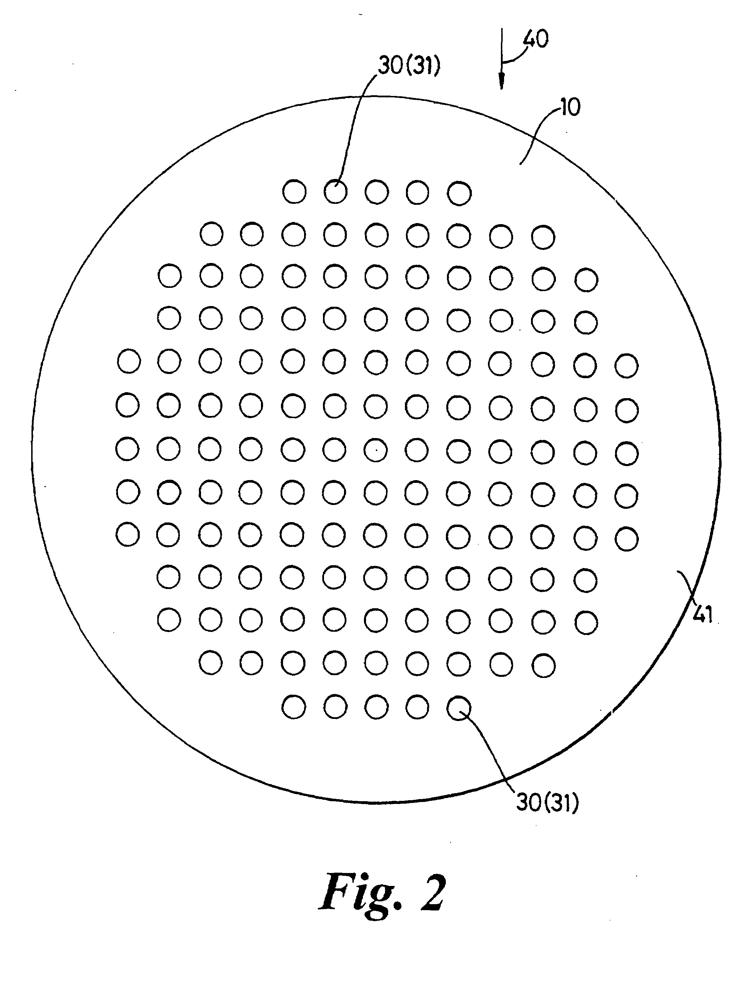

The first type 10 of the discs making up the heat exchanger is seen in plan in Figure 2. Disc 10 is called a header plate and it will be seen that there are six header plates or discs 10 shown at the left hand side of Figure 1. Each header plate 10 as with the other types of plate or disc is made of stainless steel 0.5 mm thick. The first fluid passes through a plurality of chemically milled circular orifices of 2 mm bore which form the passageways 30 and the entries and exits 31 for the first fluid.

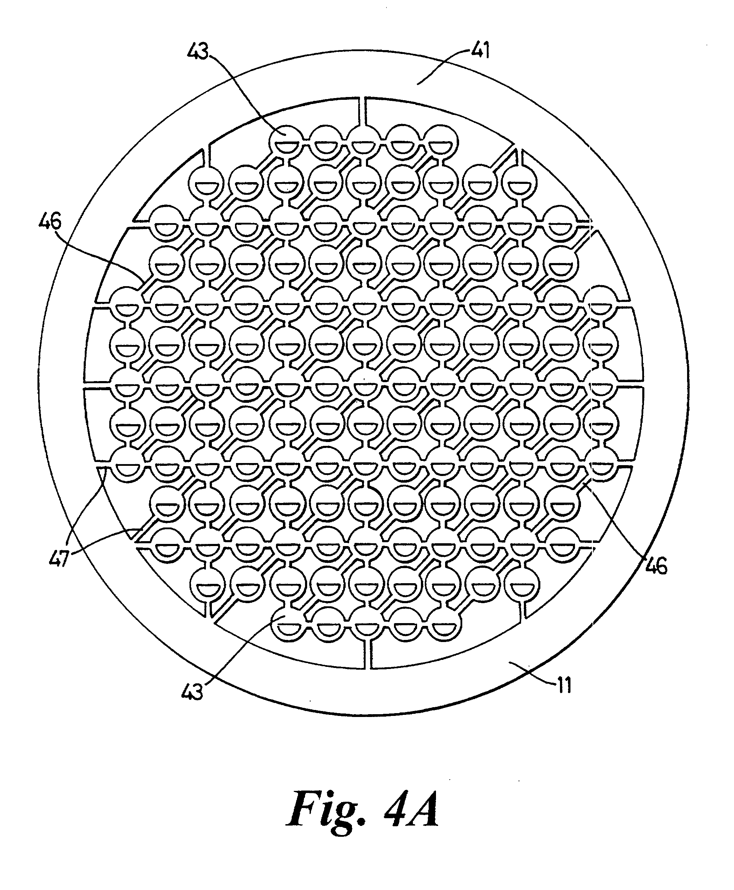

Moving longitudinally along the heat exchanger from the left side as seen in Figure 1 is a first variant of a third type of disc, which we shall call a first restricted spacer 11, and this is illustrated in Figure 4A. It has a continuous peripheral portion 41 common to all the other types of discs and within this peripheral portion 41, and joined to it by a number of web supports 47, are a plurality of regularly spaced orifice surrounds 43 each providing semi-circular orifices within their lower halves. Further orifice surrounds 43 extend across the disc. Those orifice surrounds 43 not joined by a web support 47 to the peripheral portion 41 of the first restricted spacer 11, are joined to one another by web elements 46. Many of the orifice surrounds 43 not connected to a web support 47 are typically connected to only two web elements 46. The web elements 46 and web support 47 are half the thickness of the orifice surrounds 43.

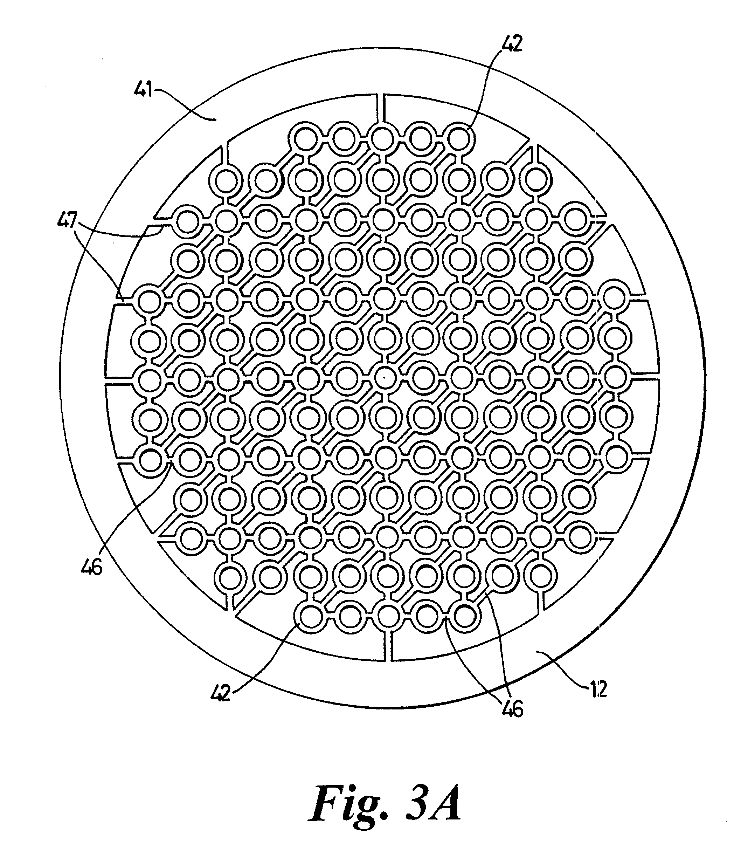

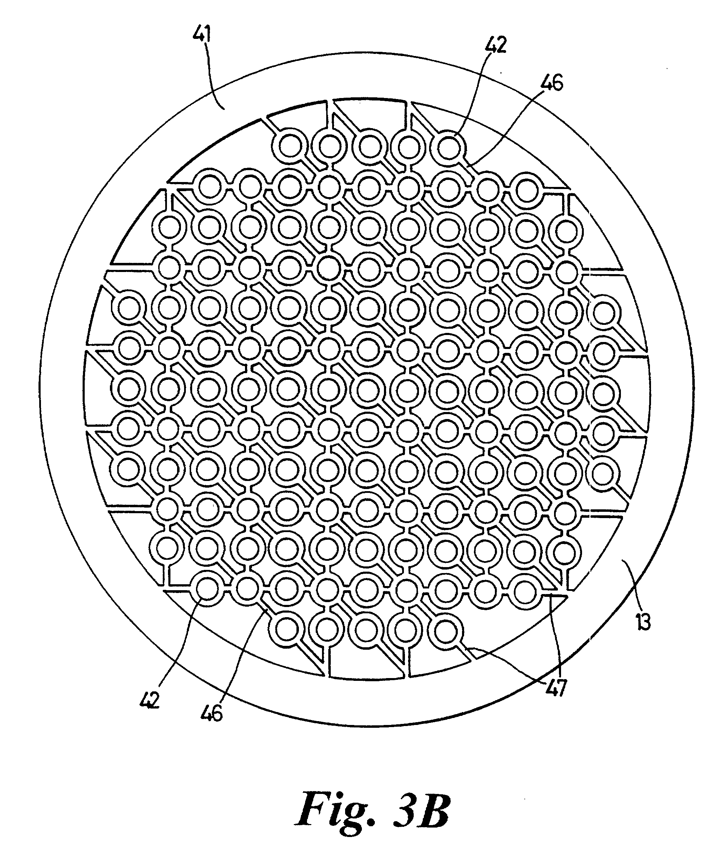

Moving right in Figure 1 there are now four discs of a second type in two variants which alternate. The first variant of the second type of disc is numbered 12 and shown in Figure 3A. The second variant of the second type of discs is numbered 13 and shown in Figure 3B. They are called respectively first unrestricted spacers 12 and second unrestricted spacers 13. Each of them comprise a peripheral portion 41 to which are joined by web supports 47 a number of orifice surrounds 42 which each enclose a circular orifice. Further orifice surrounds 42 extend across the disc and are joined to the orifice surrounds 42 by web members 46.

Each circular orifice enclosed by orifice surrounds 42 in the first unrestricted spacer 12 has the same diameter as those in the second unrestricted spacer 13. They also have the same diameter as the semi-circular orifices provided by the orifice surrounds 43 in the first unrestricted spacer 11, and the same diameter as entries 30 in header plates 10. When the discs are stacked together, the circular or semi-circular orifices in each disc have common centre lines.

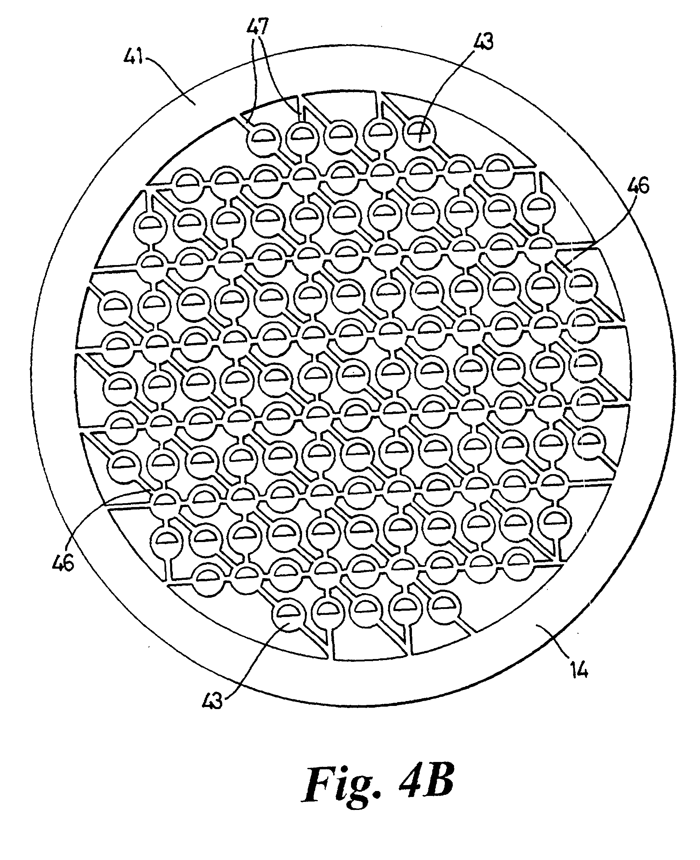

Next, moving to the right in Figure 1, is a second variant of a third type of disc, called a second restricted spacer 14, which is seen in Figure 4B. This is similar to the first restricted spacer 11, in that semi-circular orifices are provided for the first fluid by orifice surrounds 43, but with the second restricted spacer 14 the first fluid flow is in the upper portion of each orifice surround 43. The alternate location of first 11 and second 14 restricted spacers along the heat exchanger interspersed by unrestricted spacers 12 and 13 causes undulation in the flow of the first fluid, therealong increasing turbulence. Different restrictions providing, for example, a semi-circular orifice in the right or left hand half of each orifice surround, could be used as alternatives for inducing further turbulence.

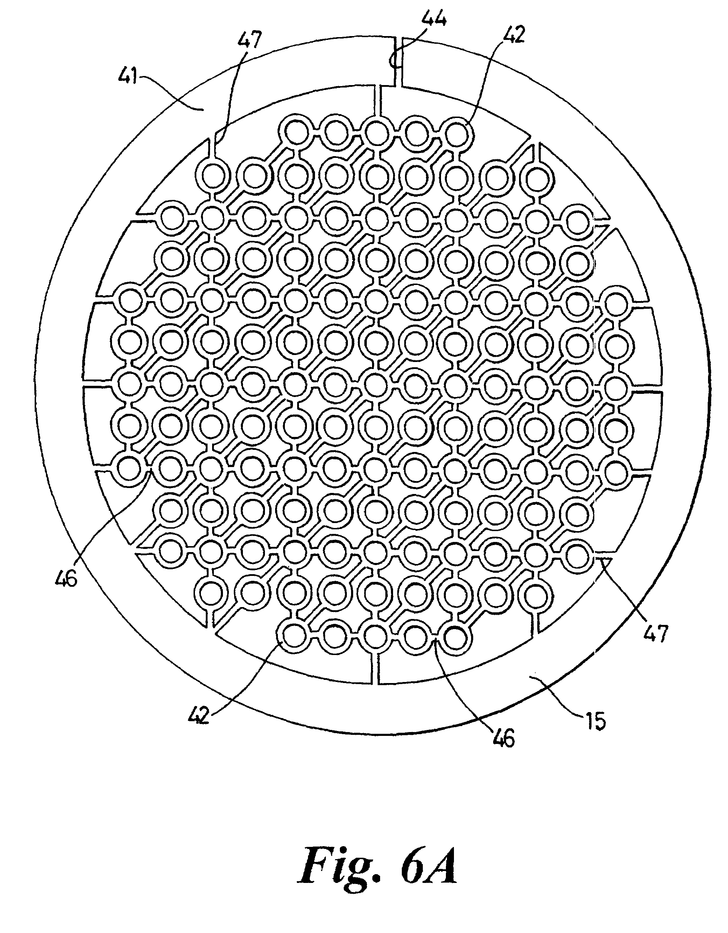

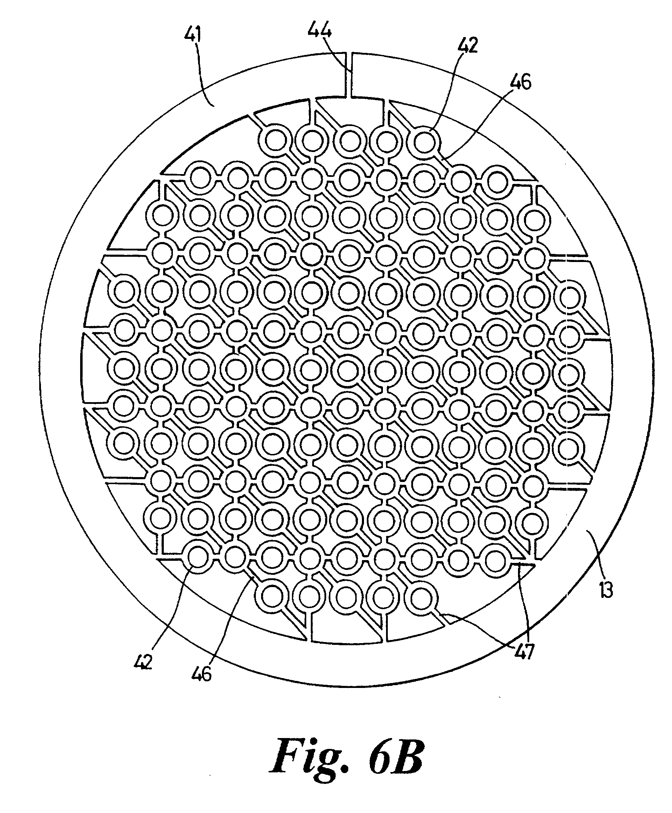

The second restricted spacer 14 is followed moving to the right in Figure 1, by one each of second and first variants of the second type of disc i.e. unrestricted spacers 13 and 12. There are then two discs of a fifth type, illustrated in Figures 6A and 6B. A first variant of the fifth type of disc, called a first vented spacer, is numbered 15 and shown in Figure 6A. A second variant of the fifth type of disc, called a second vented spacer, is numbered 16 and shown in Figure 6B. These vented spacers 15 and 16 are similar to the first and second unrestricted spacers 12 and 13 in their configurations of orifice surrounds 42, web member 46 and web supports 47, but they each have a vent 44 through the periphery 41 of the disc. This fifth type of disc or vented spacer is incorporated to permit evacuation of the interior of the heat exchanger (after sealing the entries and exits, 30 and 31, for the first fluid) in order to promote the atmosphere required for successful diffusion bonding,

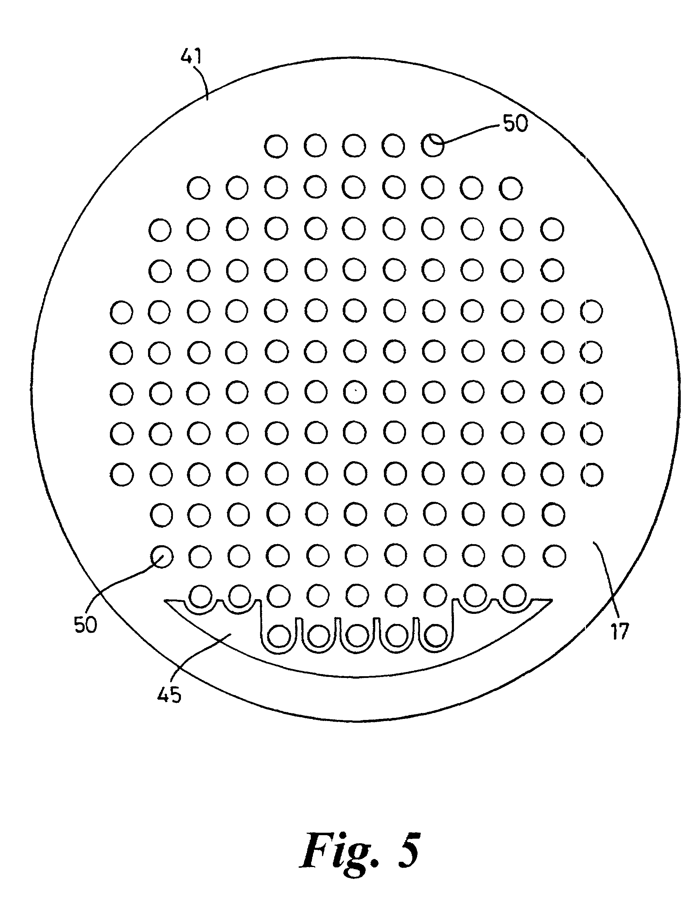

Returning to Figure 1, it can be seen that the first and second vented spacers 15 and 16 are followed by a further first restricted spacer 11 and then four unrestricted spacers 12, 13, 12, 13. Still moving right, there is then a further second restricted spacer 14, and four more unrestricted spacers 12, 13, 12, 13, before arriving at a fourth type of disc called a separator plate 17 seen in plan in Figure 5. Separator plate 17 has a plurality of circular orifices 50 which, when the discs are stacked, align with orifices of the same diameter in other types of disc to form a passageway for the first fluid.

In one sector (towards the bottom end as seen in Figures 1 and 5), the separator plate 17 closest to the left hand end of the heat exchanger has a non-circular orifice 45 adjacent the periphery 42. Orifice 45 covers an area equivalent to several of the circular orifices. Its function can be seen more clearly in Figure 1 by following arrows 23. The transversely flowing second fluid passes through non-circular orifice 45 and reverses its direction of flow, i.e. it turns through around 180°. It can be seen that this takes place a number of times along the heat exchanger and in each case it is achieved by use of a separator plate 17, although alternate separator plates along the heat exchanger are rotated through 180° to give the necessary change of direction of the transversely flowing second fluid. In an alternative version, a sequence of non-circular orifices 45 located at different positions on the separator plate could be used to impart a swirling motion to the second fluid.

The heat exchanger shown in Figure 1 shows nine sections along the length, each separated by a separator plate 17, giving eight changes in direction in the transverse flow of the second fluid. Within each section the sequence of discs is the same, although it will be appreciated that variations to this sequence are possible e.g. to increase the turbulence of the first fluid by increasing the number or position of restricted spacers 11 and 14, or by changing the numbers of plates to accomodate changes of state or volume of the working fluids. First passageways 30 are shown in the drawings as being arranged in parallel rows (see Figure 2) with each passageway 30 being in line with the next when viewed in the direction of arrow 40. In an alternative arrangement adjacent passageways 30 could be staggered when viewed in the direction of arrow 40 so that alternate passageways 30 form part of another parallel row.

The entry and exit of the second fluid are omitted from Figure 1, for the sake of clarity, so that the peripheries of the discs are shown forming a continuous cylindrical shell. Jigging lugs and/or holes are provided in each disc at convenient locations to facilitate the subsequent alignment of the stack of the discs for bonding. After the heat exchanger assembly has been compressed axially to bring all the discs into intimate contact, and the stack has been diffusion bonded together, entry and exit for the secondary fluid are spark eroded or chemically milled through the shell between markers 60 with the secondary fluid flow through the entry and exit being indicated by arrows 23. Entry and exit typically form a circular or rectangular pattern on the shell with a length along the shell equivalent to one section of the heat exchanger i.e. equal to the distance between separator plates 17.

The second fluid may take part in heat exchange only over part of the length of the heat exchanger. In this case there may be a plurality of entries and exits for different transversely flowing fluids.

Heat exchangers according to the invention offer economy of manufacture over conventional tube and shell heat exchangers as well as the potential to increase the surface area per unit volume by significant amounts. An additional feature of the embodiment described is that bypassing of the second fluid between passes around the periphery of the separator plates can be eliminated as the shell is now integrally formed with the plates.

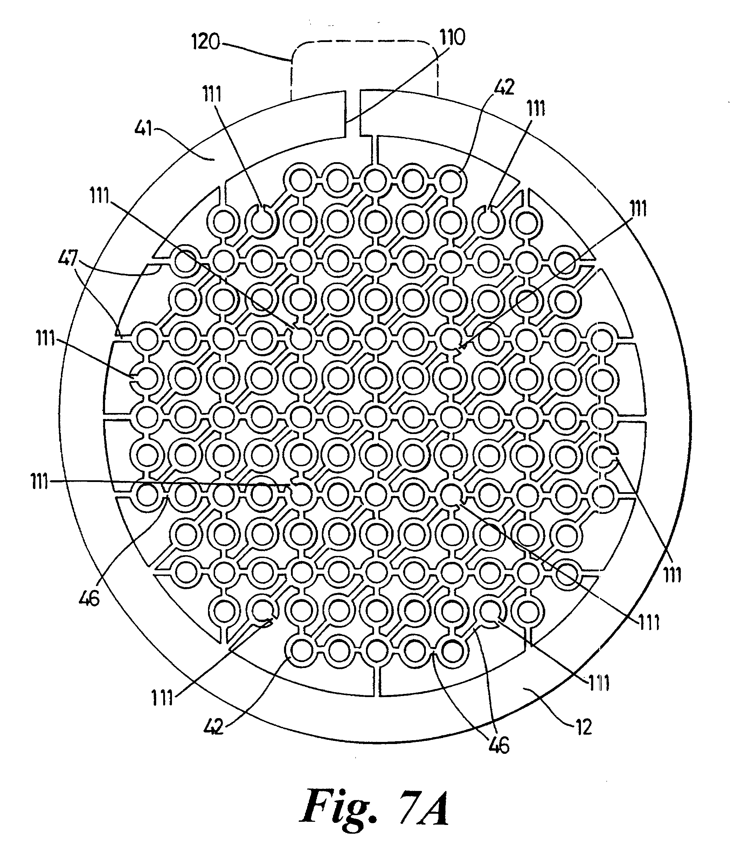

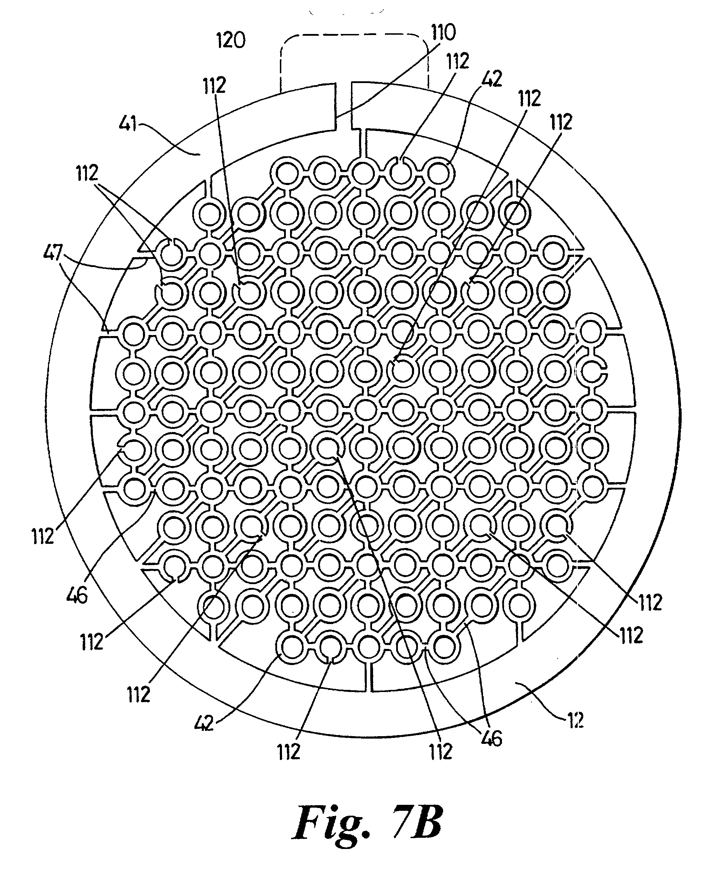

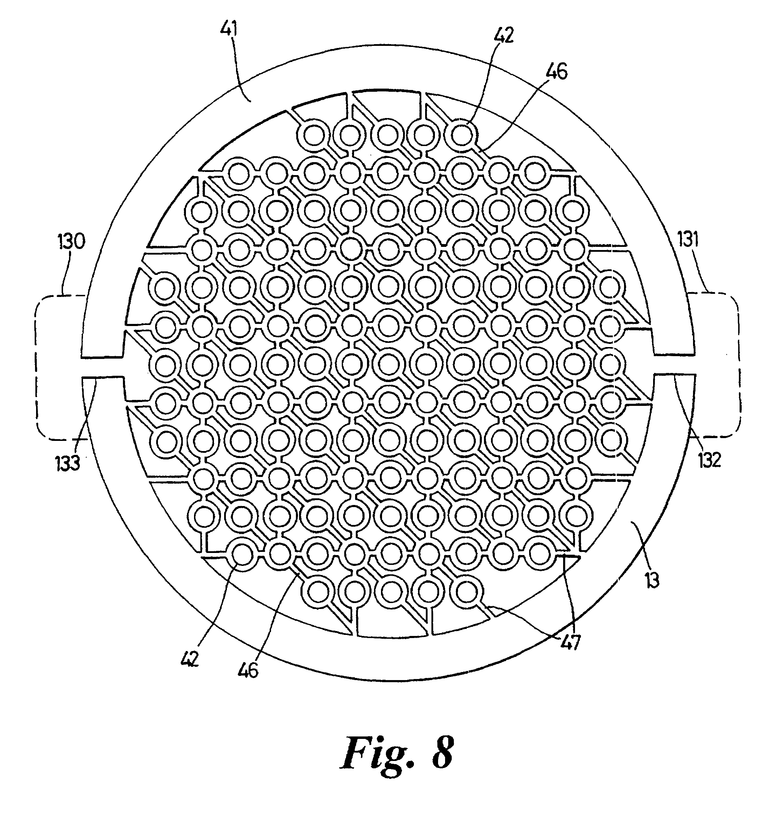

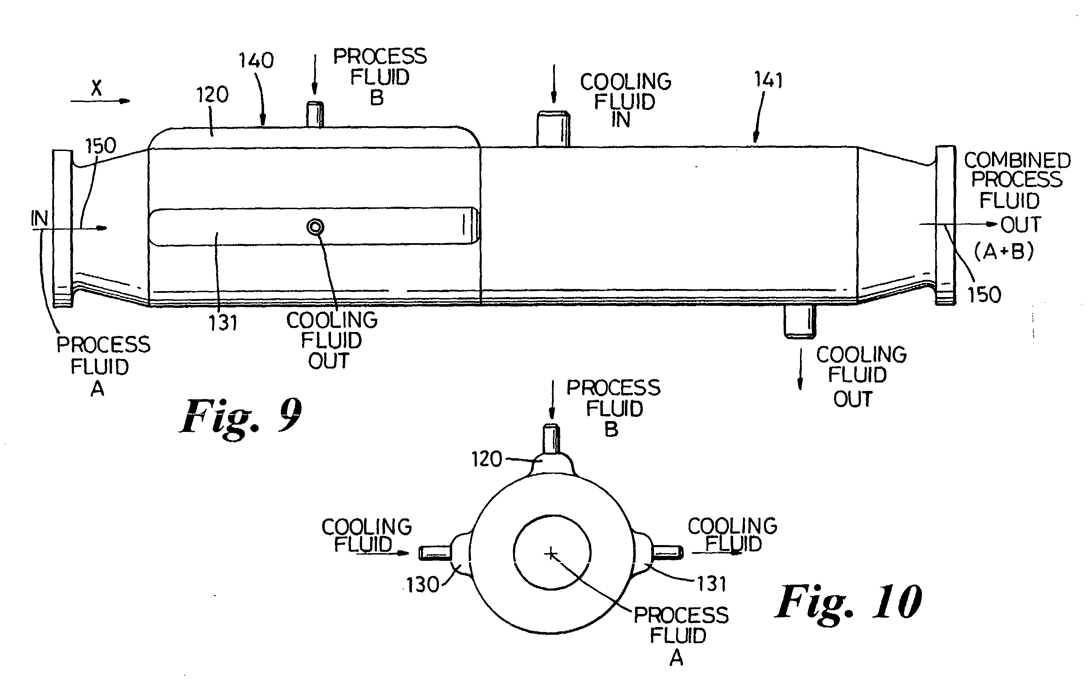

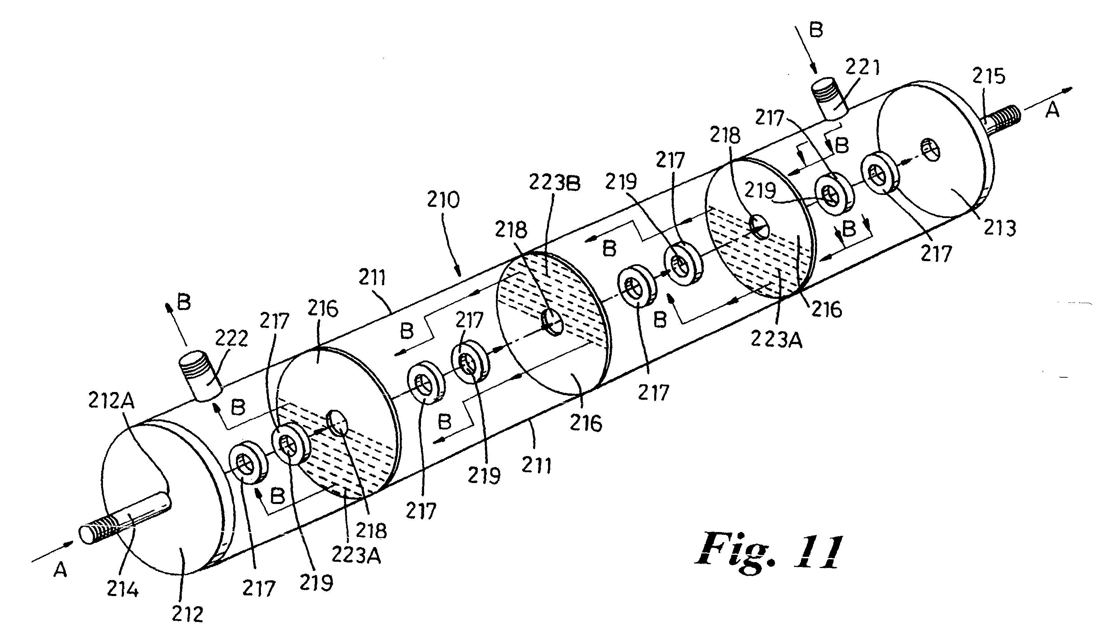

The heat exchanger shown in Figures 9 and 10 and the components shown in Figures 7A, 7B and 8 exemplify how the invention is applied in the cooling of two or more process fluids as such process fluids are combined together.

The disc shown in Figure 7A is generally similar to that illustrated in Figure 3A. The differences are that (a) a slot 110 is provided through the peripheral portion 41 of disc 12 and (b) a number of the orifice surrounds 42 are provided with apertures 111. Ten orifice surrounds 42 are shown in Figure 7A as having apertures 111, but the actual number will depend upon the nature of the process fluids to be combined and the composition of the desired combination.

The disc shown in Figure 7B is again generally similar to that illustrated in Figure 3A. This disc also has a slot 110, typically in the same position on the disc as that shown in Figure 7A. A number of the orifice surrounds 42 are provided with apertures 112, but these apertures are in different orifice surrounds 42 from those illustrated in Figure 7A. Apertures 111 and 112 typically only extend through part of e.g. half, the thickness of each disc.

The disc illustrated in Figure 8 is generally similar to that illustrated in Figure 3B. In this case however, the disc has two slots 132 and 133 in its peripheral portion 41. Slots 132 and 133 may be substantially opposite one another and provide respective inlets and outlets for cooling fluid such as water. The example shows one inlet and one outlet, but the cooling requirements may make it desirable to have a plurality of slots 132 and 133.

The heat exchanger shown in Figures 9 and 10 has two sections through which the process fluids pass. A first section 140 provides for the introduction of the process fluids one to another, and for localised cooling resulting from the combination of process fluids. A second section 141 is arranged to cool the combined process fluids to the desired output temperature for the next stage of the process.
Alternatively the second section 141 may be arranged to provide a heating effect on the combined process fluids if it is necessary for the subsequent process. The process fluids travel generally in the direction indicated by arrow 150.

In the first section 140 of the heat exchanger, discs such as those shown in Figures 7A, 7B and 8, as well as those shown in Figure 2, are stacked and bonded together. A typical arrangement of such discs will now be described, starting from the end of the first section 140 into which the first process fluid is introduced.

A group of four to six discs 10 as shown in Figure 2 form a header plate through which a first process fluid is introduced into the first section 140. This is then followed by one disc as shown in Figure 7A, whose web member 46 and web supports 47 are thinner than the orifice surrounds 43, and then by a single disc 10. Then comes one disc as shown in Figure 8 and another single disc 10. This is followed by one disc as shown in Figure 7A and another single disc 10 and is repeated along the whole of the first section 140. In another arrangement, the sequence has alternative discs of the variant shown in Figure 7A replaced by discs as shown in Figure 7B.

Apertures 111 (and 112) may extend through the complete thickness of disc 12 or only partially therethrough e.g. they may extend through half the disc thickness. For a disc thickness of 0.5 mm, apertures 111 (and 112) may be 0.25 mm deep and 0.5 mm wide. The aperture dimensions will depend on the relative densities and pressures of the process fluids which are to be mixed and also on the dimensions of slot 110 and the pressure drop between slot 110 and apertures 111 or 112.

The exterior of the first section 140 carries three longitudinally-extending header tanks or manifolds. A tank 120, positioned above the first section 140, carries a second process fluid, and tanks 130 and 131, mounted on either side of first section 140, carry a cooling fluid. As seen in Figures 9 and 10, tank 130 carries coolant to be admitted to the first section 140 whilst tank 131 carries coolant which has left the first section 140. Each of tanks 120, 130 and 131 are connected to exterior pipework (not shown) for transport of fluids to or from the tanks. The tanks are shown schematically in dashed outline in Figures 7A, 7B and 8.

The first process fluid (fluid A), after entering the first section 140 through the passageways 30 in the group of discs 10, travels through the passageway formed by orifice surrounds 42 in the disc shown in Figure 7A. The second process fluid (fluid B) passes from tank 120 via slot 110 and transversely across the first section 140 and is introduced to fluid A via apertures 111 in a proportion (or indeed all) of the orifice surrounds 42. The pressure of fluid B at apertures 111 is higher than that of fluid A. Turbulent conditions to induce efficient mixing in passageways 30 may be provided by an arrangement of first spacers 11 and second restricted spacers 14 as shown in Figure 1. Combination of fluid B with fluid A typically takes place with an exothermic reaction.

After passing through passages 30 in a single plate 10, the combined fluid A and B travels through the passageway 30 formed by the orifice surrounds 42 in the disc shown in Figure 8, and then through passages 30 in another single plate 10. Within the thickness of the disc shown in Figure 8, cooling fluid moves transversely across the first section 140 of the heat exchanger from tank 130 to tank 131, thereby cooling the orifice surrounds 42 and then the combined fluid A and B within the passages found by the orifice surrounds 42.

This sequence of introduction of fluid B to fluid A followed by a cooling stage continues along the first section 140.

In an alternative arrangement, another process fluid (fluid C) may be introduced into different passageways from those carrying fluid A or fluid A and B by using the disc shown in Figure 7B. The disc shown in Figure 7B may also be used to introduce fluid B to fluid A in a different set of process fluid passageways, e.g. such that any very strong exothermic reactions are distributed across the first section 140.

The second section 141 of the heat exchanger is typically arranged with its discs in a sequence as shown in Figure 1, although the initial header plate section may have fewer discs 10 than shown in that Figure. The second section 141 may be assembled in the same stack with the first section 140 such that, following assembly, the whole heat exchanger may be bonded together by diffusion bonding in a single operation. Alternatively, the first section 140 and the second section 141 may be made as stand-alone units.

The heat exchangers and components illustrated in Figures 11 to 14 exemplify arrangements in which the plates or discs do not include peripheral portions which when bonded together comprise the heat exchanger shell. In these examples, shown in simplified form for the purpose of clarity, the shell is formed separately and the bonded heat exchange module (or a plurality of such modules) is located within the shell.

In Figure 11 a circular cylindrical heat exchanger 210 has a circular cylindrical outer shell 211. At each end of the shell 211 is a header plate 212, 213, welded into the end of shell 211. An inlet pipe 214 enters the plate 212 concentric with the longitudinal axis of the shell 211 and an outlet pipe 215 similarly leaves through header plate 213, again concentrically with the longitudinal axis. A stack of separator plates 216 and spacers 217 runs longitudinally inside shell 211, the stack being shown in exploded form in Figure 11. The separator plates 216 are discs of diameter to be a tight push fit inside shell 211. Each adjacent pair of plates 216 is separated in this embodiment by two spacers 217 and each header plate is also separated from its adjacent disc by two spacers 217.

Each separator plate has a central hole 218 and each spacer has a central hole 219, the holes being concentrically aligned along the longitudinal axis of shell 211.

The series of aligned holes 218, 219 form a tubular duct 220 extending between inlet 214 and outlet 215 and thereby provide a first fluid stream duct for fluid to flow in the direction of arrow A through the shell 211.

Shell 211 has a second inlet pipe 221 adjacent the outlet end of the first fluid stream and a second outlet pipe 222 adjacent the inlet end of the first fluid stream.

Each separator plate has a number of perforations 223A or 223B through its thickness, the perforations lying in one semicircle only of the face of each plate, the other semi circle being unperforated. Perforations 223A of one disc are positioned to correspond to the unperforated region of the adjacent plate(s)and perforations 223B of those adjacent plates similarly correspond to the unperforated regions of their adjacent plates.

A second fluid flow duct is thereby provided between inlet 221 and outlet 222 and is defined by the inner surface of shell 211, the outer surfaces of spacers 216 and the perforated plates. This flow duct is shown by arrows B and, as shown, due to the staggering of adjacent perforated plates, the second fluid stream circulates about the first fluid stream.

As shown the first stream travels longitudinally of shell 211 in the opposite direction to the longitudinal parameter of the flow of the second stream.

Inlet pipe 214 leads into a dome-shaped inlet tank 214A covering the inlet end of shell 211 rather than leading directly into header plate 212 with its concentric hole 212A aligned with duct 220.

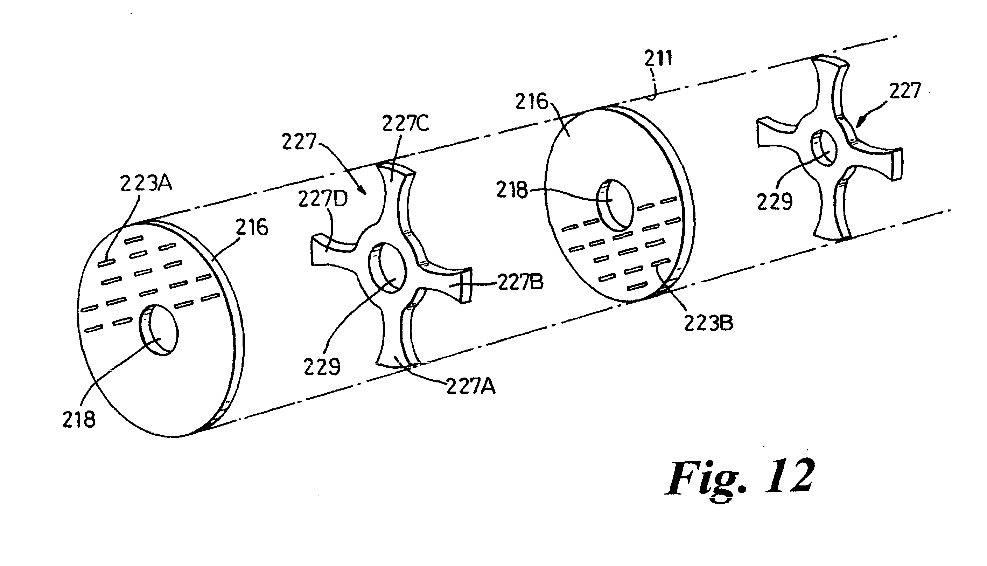

Figure 12 shows an alternative form of plate and spacer configuration in which a single spacer 227 is positioned between each pair of adjacent plates 216. Again adjacent plates have perforated semi-circular regions with perforations 223A and 223B staggered from each other. In this embodiment the spacers 227 are of cruciform shape defining a central hole 229 and having four arms 227A, B, C, D which extend to and contact the interior surface of shell 211. The ends of the arms are radiussed to conform closely to the shell.

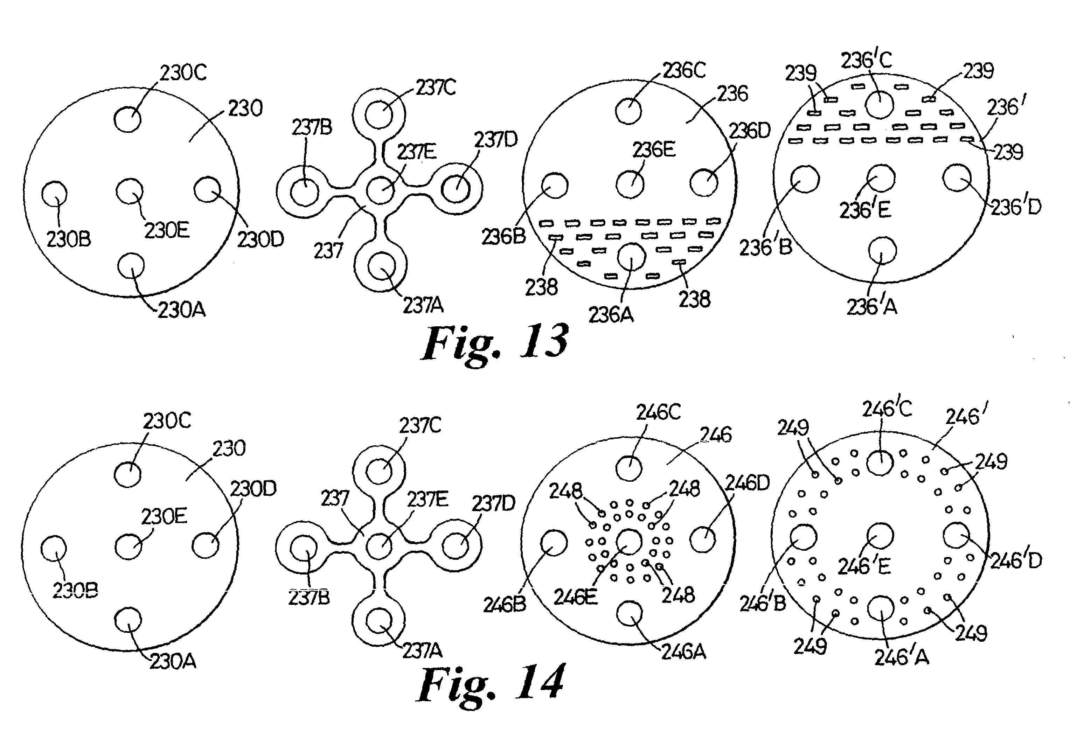

In Figures 13 and 14 are shown alternative embodiments in which a number (five being shown) of first fluid stream ducts are provided.

As shown, a header plate 230 has five duct holes 230A, 230B, 230C, 230D, 230E. Spacer 237 is again of cruciform shape but in addition to having a central hole 237E, it has a hole 237A, 237B, 237C and 237D in each arm. Separator plates 236 and 236' (Figure 4) similarly have five holes 236A, 236B, 236C, 236D, 236E and 236'A, 236'B, 236'C, 236'D, 236'E. When the header plate, spacers and separator plates are stacked in a shell, the five sets of holes are aligned to provide five ducts.

As shown in Figure 13, one plate 236 has a series of rectangular perforations 238 in one semi-circular region and an adjacent plate 237 has a corresponding series of rectangular perforations 239 in a diametrically opposite semi-circular region.

In Figure 14, separator plates 246 and 246' have an identical series of five holes 246A to E and 246'A to E but a different arrangement of perforations. Plate 246 has a series of circular holes 248 in a radially central region of the plate and plate 246' has a series of circular holes in a radially outward region of the plate. By this means a radially inward outward swirling of the second fluid flow can be achieved.

The perforations may be of shape other than rectangular or circular.

The number of first fluid flow ducts may be greatly increased over those shown above.

As indicated above, seals may be provided, if needed, between the shell and the periphery of the separator plates.

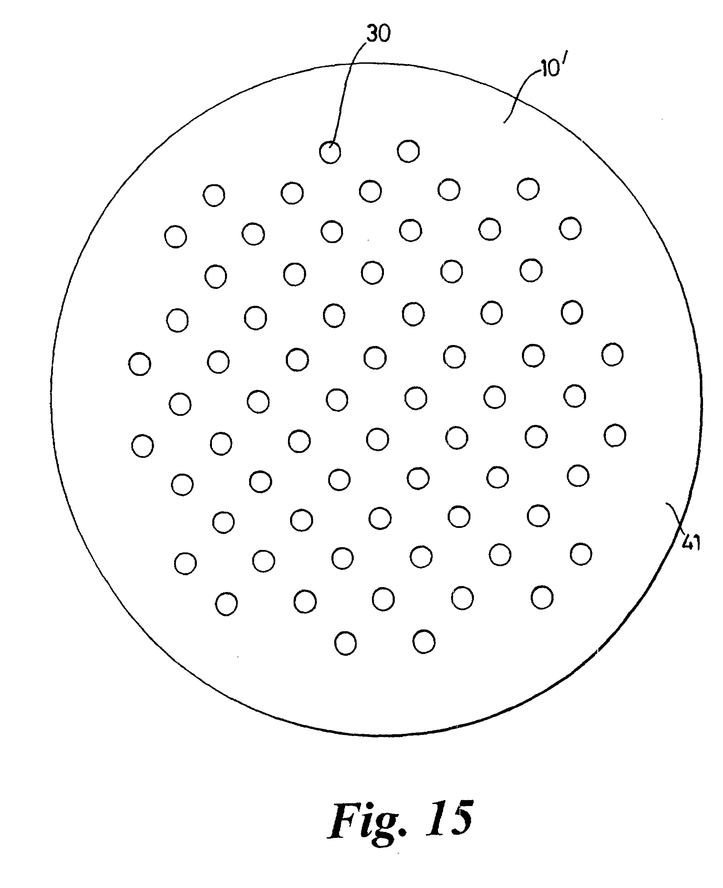

The discs shown in Figures 15, 16 and 17 are employed when it is desired to have a number of separate first fluids passing through the heat exchanger. This is known as multi-streaming (on the 'tube' side) and permits a number of different fluids passing longitudinally through the heat exchanger to be cooled (or heated) by a common transversely flowing cooling (or heating) fluid. It may also be used for example to cool one stream of fluid over only a particular portion of the length of the heat exchanger, whilst another stream of fluid continues to be cooled over the full length of the heat exchanger.

The disc 10' shown in Figure 15 is generally similar to that shown in Figure 2 except that alternate passageways 30 have been removed and only half the area of the passageways is available for a first stream. Disc 10' or a number of discs 10' forms the first disc of the stack and acts as a header plate.

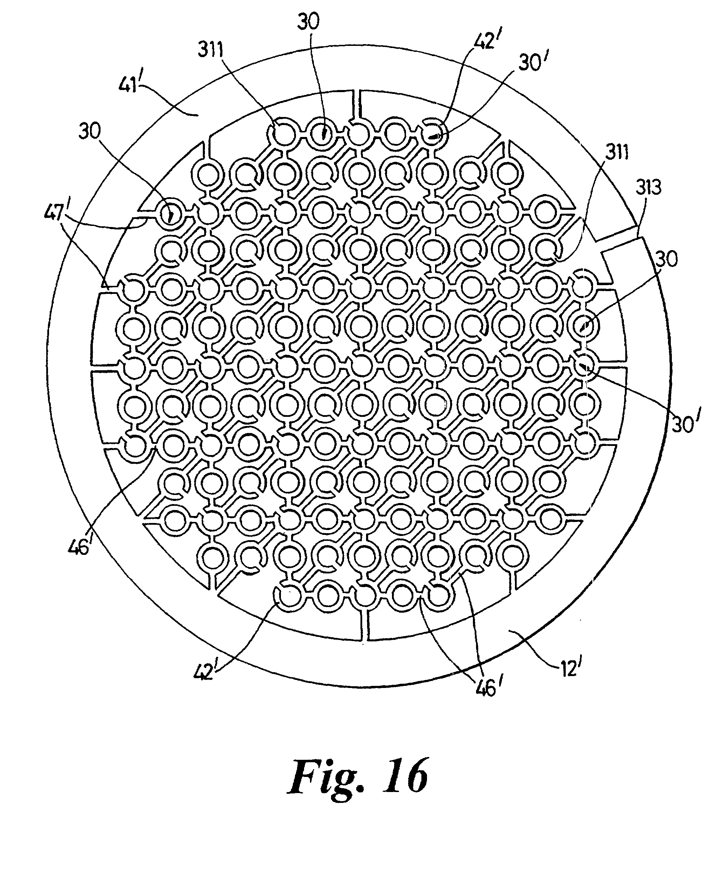

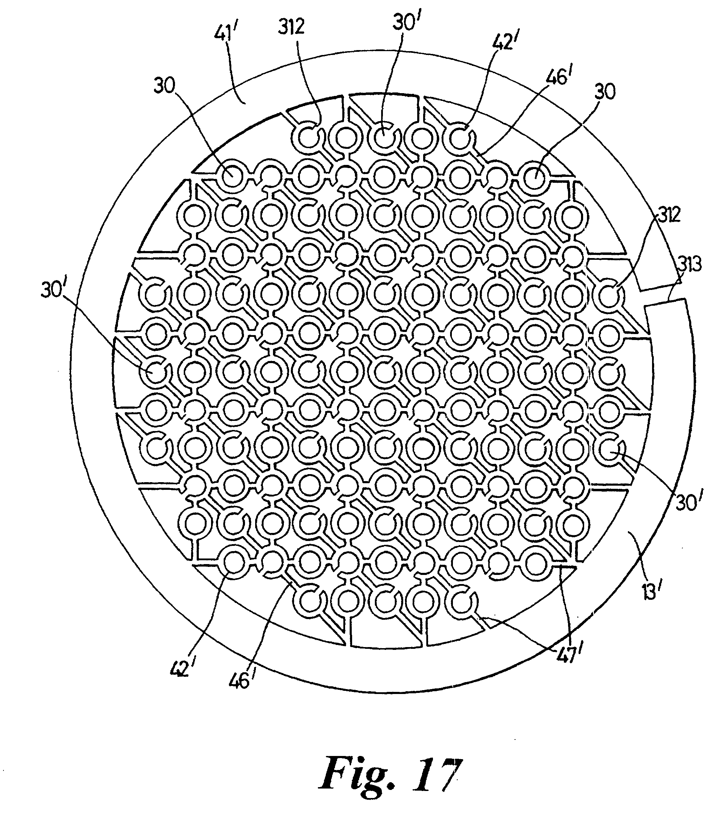

Discs 12' and 13' shown respectively in Figures 16 and 17 are generally similar to discs 12 and 13 shown in Figures 3A and 3B. It can be seen from Figures 16 and 17 however that the orifice surrounds 42' for certain of the passageways 30 have apertures 311 and 312. Such apertures 311 and 312 do not extend through the full thickness of each disc 12' and 13' but typically extend to half the thickness.

Discs 12' and 13' are located in the disc stack adjacent discs 10' forming the header plate.

Apertures 311 and 312 do not enter passageways 30 seen in Figure 15. The apertures 311 and 312 enter passageways 30' which are effectively blanked off by disc 10' to the first stream.

A second longitudinal (or tube-side) stream enters passageways 30' through one or more access points 313 cut in the perimeter of discs 12' and 13'. The position of apertures 312 in the circumference of orifice surround 42' is different (see Figure 17) from the position of apertures 311 (see Figure 16) in the same orifice surround 42'.

The disc stack is then continued with a single disc 10' and then discs 12 and 13 but with such discs modified as shown in Figure 8 to permit entry and exit of a cooling fluid to flow transversely across both sets of passageways 30 and 30', thereby cooling both separate streams passing longitudinally through the heat exchanger.

Fluid in the passageway 30' may be removed from the heat exchanger by sets of discs 12' and 13' positioned downstream of the fluid entry provided such discs 12' and 13' are always separated by a disc 10' from any cooling fluid. Also, it is possible to introduce third or further streams to flow longitudinally through the heat exchanger by only permitting a proportion of passageways 30' to be provided with apertures 311 and 312 immediately following the header plate 10'. Other streams can then be added by providing a pair of discs 12' and 13' with apertures 311 and 312 in a number of different passageways 30' which will at all times remain separate from other passageways 30' containing other streams.

The central position of the heat exchanger would typically have transverse coolant (or second fluid) plates as shown in Figure 1, i.e. shown by arrows 23.

### Industrial Applicability

Compact heat exchangers in accordance with the invention are particularly suitable for the process industries or in gas separation or aerospace applications. Designs may have longitudinally-extending first passageways which are not all of the same bore. For example, first passageways closer to the shell of the heat exchanger may have a different bore as compared with first passageways closer to the longitudinal axis. In further variants, the pitch of the first passageways may not be constant as shown (see e.g. Figure 2) but could be different for different segments or transversely-extending regions of the heat exchanger. Pitches and/or bores must remain the same over the longitudinal extent of such first passageways. These possibilities however provide considerable scope for the designer to match the functional requirements of the heat exchanger user.

## Claims

1. A heat exchanger comprising a stack of thin plates (10 to 17), the plates (10 to 17) having orifices therethrough which cooperate with orifices in adjoining plates to provide (a) first passageways (30) for a first fluid to pass in a substantially longitudinal direction (33) through the heat exchanger and (b) second passageways for a second fluid to pass through the heat exchanger along substantially transverse paths, the plates (10 to 17) being bonded together in fluid-tight manner and providing both primary and secondary heat exchange surfaces, **characterised in that in that** one or more separator plates (17) are arranged within the heat exchanger which permit the second fluid to pass through the heat exchanger from one transverse path to another transverse flow path.

2. A heat exchanger according to Claim 1, **characterised in that** the stack incorporates one or more header plates (10) which prevent the flow of either fluid in a longitudinal direction except through said first passageways (30).

3. A heat exchanger according to Claim 1 or 2, **characterised in that** the adjoining peripheries (41) of the plates (10 to 17) form the shell or casing of a longitudinally-extending heat exchanger, the shell being created at the same time as the plates (10 to 17) are bonded together.

4. A heat exchanger as claimed in any preceding claim, **characterised in that** one or more third passageways are created within the heat exchanger to provide substantially transverse paths for a third fluid to pass from supply means (120) on the exterior of the heat exchanger and into at least some of the first passageways (30) so as to be combined with the first fluid.

5. A heat exchanger as claimed in Claim 4, **characterised in that** certain of the heat exchanger plates (12) are configured with apertures (111, 112) to provide for a predetermined percentage of the total quantity of third fluid to be introduced in a first stage followed by a cooling stage with the remaining third fluid being introduced in further stages in predetermined percentages as the first fluid passes through the heat exchanger.

6. A heat exchanger as claimed in any preceding claim, **characterised in that** the plates (10 to 17) are disc-shaped and that the stack comprises a plurality of differently configured discs (10 to 17).

7. A heat exchanger as claimed in any preceding claim, **characterised in that** at least certain of the plates (11 to 16) have orifice surrounds (42) which together provide a passageway (30) for the first fluid, said orifice surrounds (42) being connected by a web (46, 47) of the same material.

8. A heat exchanger as claimed in Claim 7, **characterised in that** for at least certain of the plates (11 to 16), the thickness of the web (46, 47) is less than that of the orifice surrounds (42).

9. A heat exchanger as claimed in any preceding claim, **characterised in that** at least some of the plates (12, 15, 16) carry a radial vent (44,110, 132, 133) in their periphery (41).

10. A heat exchanger as claimed in any preceding claim, in which supplementary first passageways (30') extend longitudinally through the heat exchanger from a position intermediate between its ends, said supplementary first passageways being accessed transversely from externally of the heat exchanger to enable a further fluid to travel longitudinally through the heat exchanger.

## Patentansprüche

1. Wärmetauscher mit einem Stapel dünner Platten (10 bis 17), wobei die Platten (10 bis 17) Öffnungen durch diese aufweisen, die mit Öffnungen in angrenzenden Platten zusammenwirken, um (a) erste Durchgänge (30) für ein erstes Fluid zum Durchlauf in einer im wesentlichen Längsrichtung (33) durch den Wärmetauscher und (b) zweite Durchgänge für ein zweites Fluid zum Durchlauf durch den Wärmetauscher entlang im wesentlichen quer verlaufender Wege vorzusehen, wobei die Platten (10 bis 17) auf fluiddichte Art und Weise miteinander verbunden sind und sowohl Primär- als auch Sekundärwärmetauscherflächen vorsehen, **dadurch gekennzeichnet, daß** eine oder mehrere Separatorplatten (17) in dem Wärmetauscher angeordnet sind, die zulassen, daß das zweite Fluid durch den Wärmetauscher von einem Querweg zu einem anderen Querströmungsweg strömen kann.

2. Wärmetauscher nach Anspruch 1, **dadurch gekennzeichnet, daß** der Stapel eine oder mehrere Kopfplatten (Sammelplatten) (10) umfaßt, die eine Strömung von Fluid in einer Längsrichtung außer durch die ersten Durchgänge (30) verhindern.

3. Wärmetauscher nach Anspruch 1 oder 2, **dadurch gekennzeichnet, daß** die nebeneinander liegenden Umfänge (41) der Platten (10 bis 17) die Schale oder das Gehäuse eines sich in Längsrichtung erstreckenden Wärmetauschers bilden, wobei die Schale zur gleichen Zeit gebildet wird, wenn die Platten (10 bis 17) miteinander verbunden werden.

4. Wärmetauscher nach einem der vorhergehenden Ansprüche, **dadurch gekennzeichnet, daß** einer oder mehrere dritte Durchgänge in dem Wärmetauscher ausgebildet sind, um im wesentlichen quer verlaufende Wege für ein drittes Fluid zum Durchlauf von einem Versorgungsmittel (120) an der Außenseite des Wärmetauschers in zumindest einige der ersten Durchgänge (30) vorzusehen, so daß dieses mit dem ersten Fluid kombiniert wird.

5. Wärmetauscher nach Anspruch 4, **dadurch gekennzeichnet, daß** bestimmte der Wärmetauscherplatten (12) mit Öffnungen (111, 112) versehen sind, damit ein vorbestimmter Prozentsatz der Gesamtmenge des dritten Fluides in eine erste Stufe gefolgt durch eine Kühlstufe eingeführt werden kann, wobei das verbleibende dritte Fluid in vorbestimmten Prozentsätzen in weitere Stufen eingeführt wird, wenn das erste Fluid durch den Wärmetauscher strömt.

6. Wärmetauscher nach einem der vorhergehenden Ansprüche, **dadurch gekennzeichnet, daß** die Platten (10 bis 17) scheibenförmig sind, und daß der Stapel eine Vielzahl verschieden ausgebildeter Scheiben (10 bis 17) umfaßt.

7. Wärmetauscher nach einem der vorhergehenden Ansprüche, **dadurch gekennzeichnet, daß** zumindest bestimmte der Platten (11 bis 16) Öffnungseinfassungen (42) aufweisen, die zusammen einen Durchgang (30) für das erste Fluid vorsehen, wobei die Öffnungseinfassungen (42) mit einem Steg (46, 47) desselben Materials verbunden sind.

8. Wärmetauscher nach Anspruch 7, **dadurch gekennzeichnet, daß** für zumindest bestimmte der Platten (11 bis 16) die Dicke des Stegs (46, 47) kleiner als die der Öffnungseinfassungen (42) ist.

9. Wärmetauscher nach einem der vorhergehenden Ansprüche, **dadurch gekennzeichnet, daß** zumindest einige der Platten (12, 15, 16) in ihrem Umfang (41) eine radiale Entlüftung (44, 110, 132, 133) tragen.

10. Wärmetauscher nach einem der vorhergehenden Ansprüche, wobei sich ergänzende erste Durchgänge (30') in Längsrichtung durch den Wärmetauscher von einer Position zwischen seinen Enden erstrecken, wobei die ergänzenden ersten Durchgänge quer von außerhalb des Wärmetauschers angeschlossen sind, um zu ermöglichen, daß ein weiteres Fluid in Längsrichtung durch den Wärmetauscher strömen kann.

## Revendications

1. Échangeur de chaleur comprenant un empilement de plaques minces (10 à 17), les plaques (10 à 17) étant pourvues d'orifices qui les traversent et qui coopèrent avec des orifices dans des plaques adjacentes pour constituer (a) des premiers passages (30) pour un premier fluide qui passe dans une direction sensiblement longitudinale (33) à travers l'échangeur de chaleur, et (b) des seconds passages pour un second fluide qui passe à travers l'échangeur de chaleur le long de trajets sensiblement transversaux, les plaques (10 à 17) étant jointes les unes aux autres de manière étanche aux fluides et constituant à la fois des surfaces d'échange thermique primaires et des surfaces d'échange thermique secondaires, **caractérisé en ce qu'**une ou plusieurs plaques de séparation (17) sont agencées à l'intérieur de l'échangeur de chaleur et permettent au second fluide de traverser l'échangeur de chaleur depuis un trajet transversal vers un autre trajet transversal.

2. Échangeur de chaleur selon la revendication 1, **caractérisé en ce que** l'empilement incorpore une ou plusieurs plaques de coiffe (10) qui empêchent l'écoulement d'un fluide ou de l'autre dans une direction longitudinale, sauf à travers lesdits premiers passages (30).

3. Échangeur de chaleur selon l'une ou l'autre des revendications 1 et 2, **caractérisé en ce que** les périphéries adjacentes (41) des plaques (10 à 17) forment l'enveloppe ou le boîtier d'un échangeur de chaleur d'extension longitudinale, la coque étant créée en même temps que les plaques (10 à 17) sont jointes les unes aux autres.

4. Échangeur de chaleur selon l'une quelconque des revendications précédentes, **caractérisé en ce qu'**un ou plusieurs troisièmes passages sont créés à l'intérieur de l'échangeur de chaleur pour constituer des trajets sensiblement transversaux pour le passage d'un troisième fluide depuis des moyens d'alimentation (120) à l'extérieur de l'échangeur de chaleur et jusque dans certains au moins des premiers passages (30), de manière à être combiné avec le premier fluide.

5. Échangeur de chaleur selon la revendication 4, **caractérisé en ce que** certaines des plaques (12) de l'échangeur de chaleur sont configurées avec des ouvertures (111, 112) pour assurer qu'un pourcentage prédéterminé de la quantité totale du troisième fluide soit introduit dans un premier étage, suivi d'un étage de refroidissement, tandis que le reste du troisième fluide est introduit dans d'autres étages en pourcentages prédéterminés tandis que le premier fluide traverse l'échangeur de chaleur.

6. Échangeur de chaleur selon l'une quelconque des revendications précédentes, **caractérisé en ce que** les plaques (10 à 17) sont en forme de disque, et **en ce que** l'empilement comprend une pluralité de disques de configurations différentes (10 à 17).

7. Échangeur de chaleur selon l'une quelconque des revendications précédentes, **caractérisé en ce qu'**au moins certaines des plaques (11 à 16) comportent des entourages (42) autour des orifices, qui constituent ensemble un passage (30) pour le premier fluide, lesdits entourages (42) des orifices étant connectés par une nappe (46, 47) du même matériau.

8. Échangeur de chaleur selon la revendication 7, **caractérisé en ce que** pour certaines des plaques au moins (11 à 16), l'épaisseur de la nappe (46, 47) est inférieure à celle des entourages (42) des orifices.

9. Échangeur de chaleur selon l'une quelconque des revendications précédentes, **caractérisé en ce que** certaines des plaques au moins (12, 15, 16) portent un évent radial (44, 110, 132, 133) dans leur périphérie (41).

10. Échangeur de chaleur selon l'une quelconque des revendications précédentes, dans lequel des premiers passages supplémentaires (30') s'étendent longitudinalement à travers l'échangeur de chaleur depuis une position intermédiaire entre ses extrémités, lesdits premiers passages supplémentaires étant accédés transversalement depuis l'extérieur de l'échangeur de chaleur pour permettre à un autre fluide de circuler longitudinalement à travers l'échangeur de chaleur.
